# EUROPEAN PATENT APPLICATION

(11) **EP 2 587 477 A2**
(43) Date of publication of application: **01.05.2013**
(21) Application number: 12186443.3
(22) Date of filing: 27.09.2012
(51) Int. Cl.: G10L 13/027, G10L 13/08

(54) **Document reading-out support apparatus and method**

(30) Priority: 27.09.2011 JP 2011211160
(71) Applicant: Kabushiki Kaisha Toshiba, Tokyo 105-8001 (JP)
(72) Inventor: Fume, Kosei, Minato-ku, Tokyo 105-8001 (JP); Tachibana, Kentaro, Minato-ku, Tokyo 105-8001 (JP); Mori, Kouichirou, Minato-ku, Tokyo 105-8001 (JP); Morita, Masahiro, Minato-ku, Tokyo 105-8001 (JP); Shimizu, Yuji, Minato-ku, Tokyo 105-8001 (JP); Suzuki, Masaru, Minato-ku, Tokyo 105-8001 (JP)
(74) Representative: Granleese, Rhian Jane

(57) **Abstract**

According to one embodiment, a document reading-out support apparatus is provided with first to third acquisition means (11, 12, 14), an extraction means (13), a decision means (16) and a user verification means (17). The first acquisition means (11) acquires a document having texts. The second acquisition means (12) acquires metadata having definitions each of which includes an applicable condition and a reading-out style. The extraction means (13) extracts features of the document. The third acquisition means (14) acquires execution environment information. The decision means (16) decides candidates of parameters of reading-out based on the features and the information. The user verification means (17) presents the candidates and accepts a verification instruction.

## Description

### FIELD

Embodiments described herein relate generally to a document reading-out support apparatus and method.

### BACKGROUND

In recent years, along with the development of computer resources and the evolution of hardware, digitization of books (ebooks) has received a lot of attention. As digitization of books progresses, terminals or software programs used to browse digital books are becoming available to customers, and the selling of digital book content has became widespread. Also, digital book creation support services have prevailed.

Digital books still have inconvenient points compared to paper media. However, by converting books which require large quantities of paper as media into digital data, efforts and costs required for delivery, storage, and purchasing can be reduced. In addition, new utilization methods such as search or dictionary consulting can be provided.

As one of utilization methods unique to a digital book, a service for reading out a digital book using a text-to-speech (TTS) system, and allowing the user to listen to that reading voice is available. Unlike this service, audio books are conventionally available. However, an audio book requires narration recording, and only limited books are provided in practice. By contrast, according to the reading-out service of a digital book, an arbitrary text can be read-out using a synthetic voice (independently of its substance). Therefore, the user can enjoy listening to content not worth the cost of narration recording (for example, frequently updated content) or for which an audio book is not expected to be made (for example, arbitrary document possessed by the user) in the form of a reading voice.

However, a technique which ensures easiness of user customization for metadata associated with reading-out of document data and flexibility of a system environment used in reading-out of document data, and can prevent reproducibility of reading-out from being impaired is not available.

### BRIEF DESCRIPTION OF THE DRAWINGS

FIG. 1 is a block diagram showing an exemplary document reading-out support apparatus according to an embodiment;
FIG. 2 is a flowchart showing an exemplary processing of the apparatus;
FIG. 3 is a table showing an example of an input document;
FIG. 4 is a table showing an example of metadata;
FIG. 5 is a flowchart showing an exemplary processing of a metadata acquisition unit;
FIG. 6 is a table showing exemplary conversion rules acquired by the metadata acquisition unit;
FIG. 7 is a flowchart showing an exemplary processing of an input document feature extraction unit;
FIG. 8 is a table showing exemplary processing results by the input document feature extraction unit;
FIG. 9 is a table showing exemplary processing results by the input document feature extraction unit;
FIG. 10 is a table showing exemplary extraction results by an execution environment acquisition unit;
FIG. 11 is a view showing exemplary extraction results by a user setting restriction acquisition unit;
FIG. 12 is a table showing exemplary extraction results by the user setting restriction acquisition unit;
FIG. 13 is a flowchart showing an exemplary processing of a parameter decision unit; and
FIG. 14 is a table showing an exemplary presentation by a user verification unit.

### DETAILED DESCRIPTION

A document reading-out support apparatus according to an embodiment of the present invention will be described in detail hereinafter with reference to the drawing. Note that in the following embodiments, parts denoted by the same reference numbers perform the same operations, and a repetitive description thereof will be avoided.

In general, according to one embodiment, a document reading-out support apparatus is provided with a document acquisition unit, a metadata acquisition unit, an extraction unit, an execution environment acquisition unit, a decision unit and a user verification unit. The document acquisition unit configured to acquire document data including a plurality of text data. The metadata acquisition unit configured to acquire metadata including a plurality of definitions each of which includes a condition associated with the text data to which the definition is to be applied, and a reading-out style for the text data that matches the condition. The extraction unit configured to extract features of the document data by applying each of the definitions to the text data included in the document data. The execution environment acquisition unit configured to acquire execution environment information associated with an environment in which reading-out processing of the document data is executed. The decision unit configured to decide candidates of parameters which are used upon execution of the reading-out processing by applying the metadata to the document data, based on the features of the document data and the execution environment information. The user verification unit configured to present the candidates of the parameters to a user, and to accept a verification instruction including selection or settlement.

According to this embodiment, easiness of user customization for metadata associated with reading-out of document data and flexibility of a system environment used in reading-out of document data can be ensured, and reproducibility of reading-out can be prevented from being impaired.

The related art will be described in more detail below.

Some techniques for reading out a digital book using a synthetic voice have been proposed.

For example, as one of these techniques, the following technique is known. In content data of a book to be distributed, correspondence between personas included in that book and their dialogs is defined in advance. Then, the user can freely designate associations between the respective personas included in that book and synthetic voice characters which read out dialogs of the personas upon listening to (or watching at and listening to) the content (that is, upon synthetic voice reading) while character images of a plurality of synthetic voice characters are displayed as a list. With this technique, the user can assign character voices of his or her favorite synthetic voice characters to the personas of the distributed book, and can listen to that book read-out by assigned synthetic voices.

However, when such content distribution and user customization function are to be implemented, some problems are posed.

In content data to be distributed, personas and dialogs have to be uniquely and finely associated with each other for each book. For this reason, content and character voices available for the user are exclusive ones distributed from a service provider or a combination of those distributed from the service provider.

A framework which allows the user to freely edit a reading style according to content, and to freely distribute and share information associated with the reading style according to the specific content independently of service providers will be examined. Even in such case, parameters defined in the reading style information and voice characters to be used depend on an environment of that creator.

For this reason, in order to allow a user who wants to listen to certain content to reproduce the reading style of that content with reference to shared style information, that user has to be able to use the same environment (for example, the same set of character voices, a speech synthesis engine having an equivalent or higher function, and the like) as that of the creator of the style information.

This forces necessity of possession of any and all voice characters to the user, and is far from reality. Also, this means that reading-out processing of book data can be implemented only by content provided by a content distribution source and a recommended environment, and it is far from the aforementioned free reading-out environment of the user.

Furthermore, even for a same user, an environment and device used by that user to play back book data may often vary according to circumstances, and the user does not always listen to book data using the same environment and device. For example, compared to a case in which the user listens to reading voices from a loudspeaker in an environment with fulfilling computer resources such as a desktop PC, if he or she listens to reading voices by headphones or earphones using a mobile device such as a cellular phone or tablet PC, for example, a set of available character voices may be limited or use of a speech synthesis engine function which requires a large computation volume may be limited in terms of restrictions of the device. Conversely, a function that the user wants to activate only under a specific environment (for example, application of a noise reduction function when the user uses a mobile device outdoors) is known. However, it is difficult to play back content by flexibly applying reading style information depending on such user environment differences and/or available computer resource differences.

On the other hand, a case will be examined below wherein such sharing and creation of metadata are spread to users in a grass-roots manner, and wide-ranging variations are available without regard to formal or informal data. In such case, choices of ways users enjoy increase, while they cannot recognize reading manners or character features before a book is played back as a reading voice.

For example, when an ill-disposed user prepares metadata which causes inadequate expressions or sudden extreme volume changes in correspondence with the matters of the content upon reading the content using the metadata, or when, for example, a reading voice offensive to the ear is included in terms of interpretation of a book or personality of a voice character even without any harm, reading according to that metadata is not always a merit for all users.

A technique which ensures easiness of user customization for metadata associated with reading-out of document data and flexibility of a system environment used in reading-out of document data, and can prevent reproducibility of reading-out from being impaired is not available.

The embodiments will now be described in more detail hereinafter.

This embodiment will consider a case in which, for example, emotions, tones, speaker differences, and the like as artifices of reading-out processing upon reading digital book data using synthetic voices are defined as metadata, and reading using synthetic voices is realized in a diversity of expressions according to the substance or features of an input document with reference to these metadata as needed. In this case, when information (metadata) is shared, and a reading style (reading-out style) corresponding to content or that specialized to a character voice is used, the document reading-out support apparatus according to this embodiment is allowed to attempt playback while ensuring reproducibility in consideration of differences of computer resources or functions actually available for the user or differences in content to be read-out (or the reproducibility can be enhanced under a condition suited to the user).

A case will be exemplified as a practical example below wherein a Japanese document is read-out in Japanese. However, this embodiment is not limited to Japanese, and can be carried out by appropriate modifications according to languages other than Japanese.

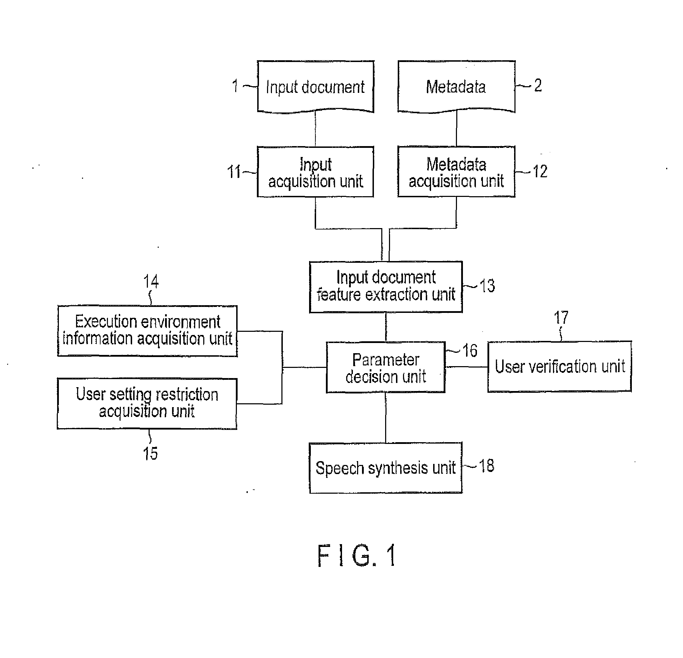

FIG. 1 is a schematic block diagram of a document reading-out support apparatus according to this embodiment.

As shown in FIG. 1, the document reading-out support apparatus includes an input acquisition unit 11, metadata acquisition unit 12, input document feature extraction unit 13, execution environment acquisition unit 14, user setting restriction acquisition unit 15, parameter decision unit 16, user verification unit 17, and speech synthesis unit (speech synthesizer) 18.

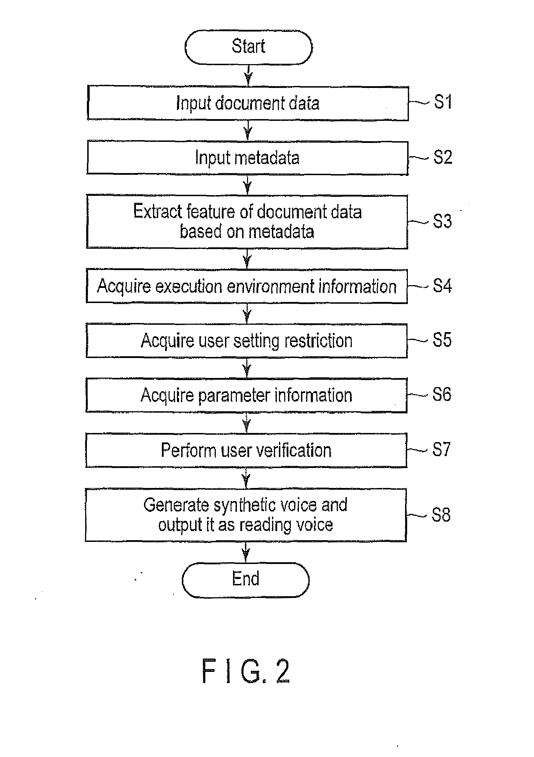

FIG. 2 shows an example of a schematic processing of this embodiment.

The input acquisition unit 11 inputs an input document 1 (step S1), and the metadata acquisition unit 12 inputs metadata 2 (step S2).

For example, the input document 1 is a digital book which is to be read-out by a voice character and includes a plurality of text data.

The metadata 2 includes, for example, feature amounts such as synthetic parameters, accents or reading ways (reading-out ways), and the like, and their applicable conditions, which are customized depending on a specific content and specific voice character.

The acquired input document 1 is stored in, for example, a DOM format.

As for the acquired metadata 2, for example, the acquired feature amounts and applicable conditions are stored in a format, which can be used in subsequent parameter decision processing.

The input document 1 may be acquired via, for example, a network such as the Internet or intranet, or may be acquired from, for example, a recording medium. The same applies to the metadata 2.

In this embodiment, the input document 1 and metadata 2 need not be created by the same creator (of course, they may be created by the same creator). The input document 1 and/or the metadata 2 may be created by the user himself or herself.

Steps S1 and S2 may be executed in a reversed order to that in FIG. 2, or they may be executed concurrently.

The input document feature extraction unit 13 extracts features of the input document 1 based on the metadata 2 (step S3).

The execution environment acquisition unit 14 acquires execution environment information associated with the system which executes reading-out processing using a voice character (step S4). The acquisition method of the execution environment information is not particularly limited.

The user setting restriction acquisition unit 15 acquires user setting restrictions for reading-out processing (step S5).

Note that steps S4 and S5 may be executed in a reversed order to that in FIG. 2, or they may be executed concurrently.

Furthermore, step S4 need only be executed until the next processing by the parameter decision unit 16, and may be executed at an arbitrary timing different from FIG. 2. The same applies to step S5.

Note that an arrangement in which this user setting restriction acquisition unit 15 is omitted is also available.

The parameter decision unit 16 integrates processing results acquired so far to decide parameter information used in actual reading-out processing (step S6).

The user verification unit 17 executes user verification required to allow the user to select/settle the parameter information (step S7). For example, when there are a plurality of candidates, which can be selected by the user, for a certain parameter, the user may select a desired parameter to settle the parameter information.

The speech synthesis unit 18 generates a synthetic voice for the input document 1 using the metadata 2 and the parameter information, and outputs a reading voice with a voice character (step S8).

The respective units will be described below.

### (Input Acquisition Unit 11)

Book data which is to be used by the user and includes a plurality of text data is acquired as the input document 1 by the input acquisition unit 11. The input acquisition unit 11 extracts text information from the acquired book data. When the book data includes layout information, the input acquisition unit 11 also acquires the layout information in addition to the text information.

The layout information includes, for example, text information, a position, font size, font style, and the like in a page layout to be rendered. For example, in case of a floating layout based on XHTML or a style sheet, for example, the layout information includes line feeds, paragraph elements, title elements and/or caption elements, and the like, which are given to text as logical elements.

The input document 1 including these pieces of information may be stored in, for example, a tree structure in the DOM format. Note that even when no layout information is included, for example, a logical element which represents a line for each line feed is defined, and text data are structured as child elements of these logical elements, thus expressing the input document 1 in the DOM format.

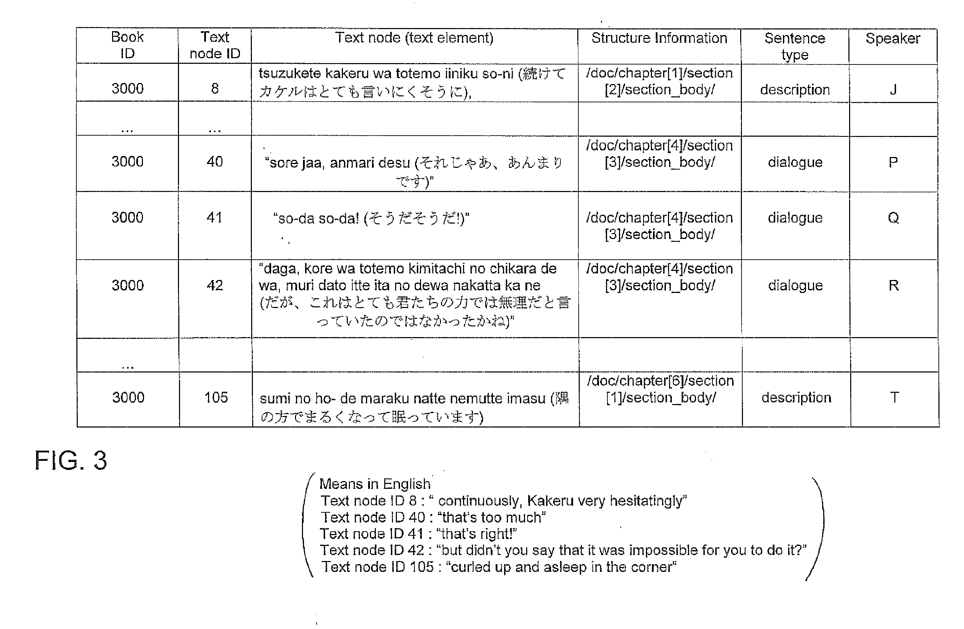

FIG. 3 shows an example of a DOM-converted input document. FIG. 3 displays the document stored in the DOM format as a list for respective text nodes. In this example, each individual text node includes "book ID" used to identify each book, "text node ID" assigned in an appearance order in that book, "text element" as the substance of that text node, "structure information" indicating a structure to which that text belongs, "sentence type" indicating whether that text is a dialog or description, and "speaker" indicating a persona who speaks that text in the book. Note that as for the "sentence type" and "speaker", information created by given estimation processing or manually may be embedded as attributes and attribute values.

Note that in FIG. 3 a text node of text node ID 8 means "continuously, Kakeru very hesitatingly..." (Kakeru is a name of a person) in English, a text node of text node ID 40 means "that's too much" in English, a text node of text node ID 41 means "that's right!" in English, a text node of text node ID 42 means "but didn't you say that it was impossible for us to do it?" in English, and a text node of text node ID 105 means "curled up and asleep in the corner" in English.

The following description will be given while exemplifying a case in which the document data is stored in the DOM format, but this embodiment is not limited to this.

### (Metadata Acquisition Unit 12)

Metadata for the book data to be used by the user is acquired by the metadata acquisition unit 12 as the metadata 2.

In this case, the metadata enumerates, for example, read conversion definitions of sentences, phrases, or words, definitions of sentences, phrases, or words to be spoken by characters in specific contexts, and the like in the content.

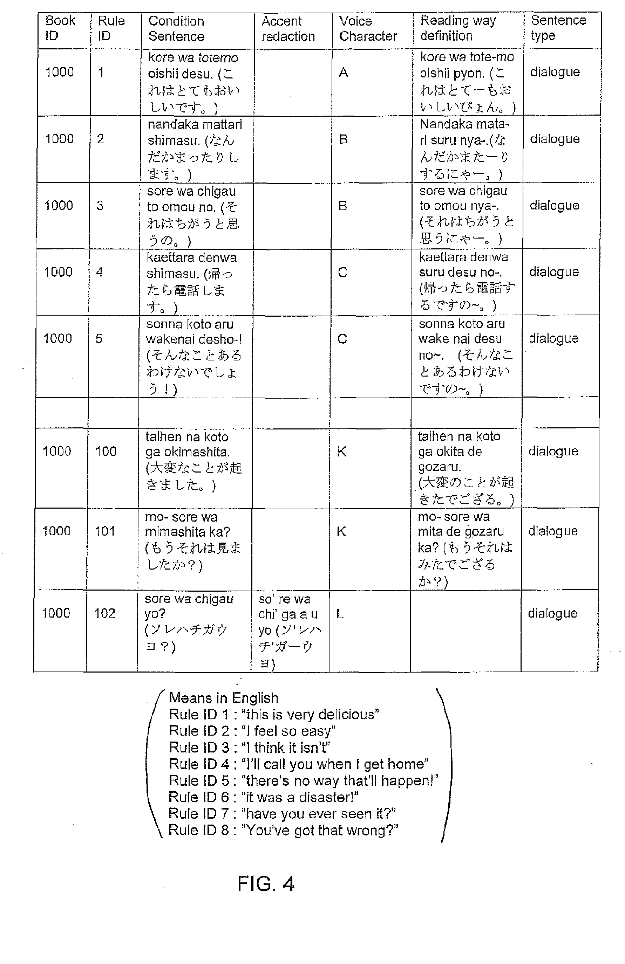

FIG. 4 shows an example of metadata. In this example, the metadata includes a plurality of custom definitions which describe applicable conditions and conversions (accent redactions or reading way definitions) to be applied to sentences, phrases, or words which match the applicable conditions. More specifically, each individual custom definition includes "book ID", "rule ID" used to identify each individual rule, "condition sentence" indicating a sentence to which the rule is to be applied, "accent redaction" which designates how to accent the sentence designated by "condition sentence" upon reading-out that sentence, "voice character" indicating a corresponding voice character, "reading way definition" which defines how to reading-out the sentence designated by "condition sentence" upon reading-out that sentence, and "sentence type" indicating a type of a sentence. In the example of FIG. 4, voice characters A, B, C, K and L to be used are available. Assume that in the example of FIG. 4, voice characters A, B, and C have a dialog-oriented feature as a sentence type attribute, and voice characters K and L have a description-oriented feature as a sentence type attribute.

Note that as attributes which characterize each voice character, for example, a language, gender, age, personality, and the like can be used.

Note that in FIG. 4, both a sentence in "condition sentence" and that in "reading way definition" of rule ID 1 mean "This a very delicious" in English.

However, compared to the sentence in "condition sentence", some reading ways or expressions of the sentence in "reading way definition" are changed to those according to the feature of voice character A. (In this example, reading ways or expressions "totemo 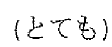 " and "~desu 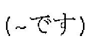 " are changed to those "tote-mo 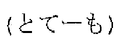 " and "~pyon 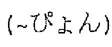 ", thereby characterizing voice character A.) For example, "This is very delicious." may be changed to "This is veeeeeeery delicious lar!" in English.

Both a sentence in "condition sentence" and that in "reading way definition" of rule ID 2 mean "I feel so easy" in English. However, compared to the sentence in "condition sentence", some reading ways or expressions of the sentence in "reading way definition" are changed to those according to the feature of voice character A. (In this example, reading ways or expressions "mattari 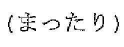 " and "~shimasu 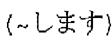 " are changed to those "mata-ri 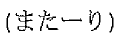 " and "~surunya- 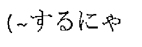 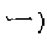 ", thereby characterizing voice character A.) Note that both sentence in "condition sentence" and that in "reading way definition" of rule ID 3 mean "I think it isn't" in English, both a sentence in "condition sentence" and that in "reading way definition" of rule ID 4 mean "I'll call you when I get home" in English, both a sentence in "condition sentence" and that in "reading way definition" of rule ID 5 mean "there's no way that'll happen!" in English, both a sentence in "condition sentence" and that in "reading way definition" of rule ID 100 mean "it was a disaster" in English, and both a sentence in "condition sentence" and that in "reading way definition" of rule ID 101 mean "have you ever seen it?" in English.

Also, both a sentence in "condition sentence" and that in "reading way definition" of rule ID 102 mean "You've got that wrong?" in English. In this case, "accent redaction" designates how to accent the sentence in "condition sentence" upon reading-out that sentence, thereby characterizing voice character L.

Then, from the substances enumerated, as shown in FIG. 4, the conversion substances are acquired based on the following viewpoints and the like, and the acquired conversion substances are held while being converted into information that can be used in the subsequent processing.
(1) Association between notations: conversion substances are associated with each other using a partial character string in the content as a condition.
(2) Association using segment information as a condition: conversion substances are associated with each other using morpheme or part-of-speech information in the content as a condition.
(3) Association using other conditions: a conversion condition cannot be uniquely decided based on a character string or morphemes in the content, and conversion substances are associated with each other in combination with logical elements, neighboring words, phrases, speakers, and the like in a document to which a target character string belongs, as a context of the target character string.

In the following description, the metadata shown in FIG. 4 is used as a practical example. However, this embodiment is not limited to this. Also, as described above, languages other than Japanese can be used as target languages.

The practical processing of the metadata acquisition unit 12 will be described below.

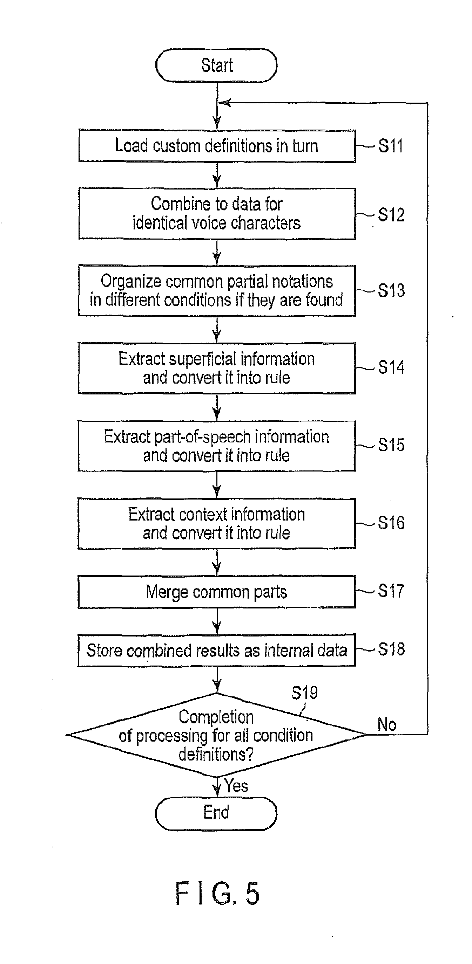

FIG. 5 shows an example of the processing of the metadata acquisition unit 12.

The metadata acquisition unit 12 acquires the custom definitions in turn (step S11).

Next, the metadata acquisition unit 12 confirms voice characters used in the acquired custom definitions. If the custom definitions include identical voice characters, the metadata acquisition unit 12 also acquires their conditions, and organizes these conditions for respective voice characters (step S12).

In the practical example of FIG. 4, since voice characters A, B, C, K, and L are used, their conditions are respectively organized. Note that FIG.4 shows a state in which the conditions are already organized for respective voice characters for the sake of simplicity.

Also, the metadata acquisition unit 12 organizes common partial notations in different conditions if they are found (step S13).

Next, the metadata acquisition unit 12 extracts pieces of superficial information and converts them into rules (step S14).

In the example of FIG. 4, since the custom definitions of rule IDs 2 and 3 include the reading way definition "~nya- 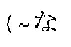 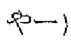 " of voice character B, these notations and condition sentences (corresponding parts in the condition sentences) are associated with each other.

The metadata acquisition unit 12 then extracts pieces of part-of-speech information, and convert them into rules (step S15).

In the aforementioned example of rule IDs 2 and 3, pieces of part-of-speech level information are extracted from their representations, and the relationship between the condition sentences and reading way definitions is checked.

Upon extracting pieces of part-of-speech information of the respective condition notation parts,
Rule ID 2: shi 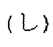 <verb>masu 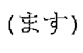 <auxiliary verb> → "surunya 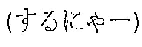 "
Rule ID 3: no 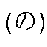 <postpositional particle> → "nya- 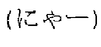 " and they are associated with each other.

Next, the metadata acquisition unit 12 extracts pieces of context information, and converts them into rules (step S16).

In the above example, as pieces of context information of these condition sentences, when morphological analysis is applied to the entire condition sentence of rule ID 2, is described as:
"nandaka 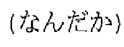 <adverb>/mattari 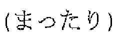 <adverb>/shi 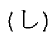 <verb>/masu 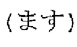 <auxiliary verb>/. <symbol>/" In this case, a symbol "/" indicates a segment boundary, and <label name> indicates a part-of-speech name of each morpheme.

When morphological analysis is applied to the conidition sentence of rule ID 3, it is descried as:
"sore 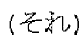 <noun>/ wa 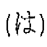 <postpostional particle>/chigau 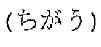 <verb>/to 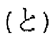 <postpositional particle>/omou 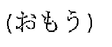 /<verb>/no 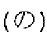 /<postpostional particle>/. <symbol>/"

Using pieces of surrounding information and pieces of finer part-of speech information as contexts, we have:
"/shi 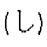 <verb>/masu 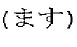 <auxiliary verb>/" → "/suru 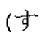 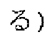 <verb (basic form) >/ nya 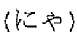 <postpostional particle>/- <noun>/"
"/omou 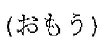 <verb>/ no 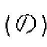 <postpostional particle>/" → "/omou 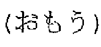 <verb (basic from)>/nya 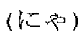 <postpostional particle>/- <noun>/"

Next, the metadata acquisition unit 12 merges common parts (step S17).

The metadata acquisition unit 12 checks whether or not common parts can be merged in data of the identical voice character.

In the above example, as a result of checking, condition parts and consequences parts are respectively merged as:
"/<verb>/<postpositional particle | auxiliary verb>/" → "<verb (basic from)>/nya 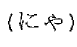 /-/" (voice character B)

Note that "|" between part-of-speech labels indicates a logical sum (OR).

Likewise, for voice character C, the following merged result is obtained:
"/<verb>/<postpositional partcle | auxiliary verb>/" → "<verb (basic form)>/desu 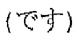 /no 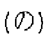 /-/"

For voice character K, the following merged result is obtained:
"/<verb>/mashi. 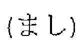 <auxiliary verb A>/<auxiliary verb B>/<auxiliary verb C>?/" → /<verb (basic form)>/<auxiliary verb B>/de 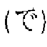 /gozaru 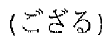 "

Furthermore, the metadata acquisition unit 12 applies the same processing to the condition sentence of rule ID 1. By checking pieces of part-of-speech information, they are expressed as:
"totemo 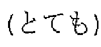 <adverb>" → "tote-mo 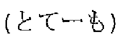 "
"desu <auxiliary verb>" → "pyon 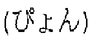 "

However, since there are no commonized parts even using context information, these notations with parts-of-speech are stored as merged results.

Upon checking the definition of rule ID 102, an accent notation is defined. The same processing is applied to this, and an association:
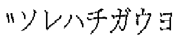 <noun>" → 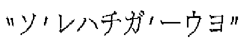 ("so re wa chi ga u yo<noun>" → "so' re wa chi ga' a u yo") is stored.

Note that the accent notation means that a position immediately before ' is accented. Hence, in the practical example, 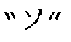 ("so") and 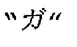 ("ga") are accented.

The metadata acquisition unit 12 stores the merged results (conversion rules) as internal data (step S18).

Then, the metadata acquisition unit 12 determines whether or not the processing is complete for all condition definitions (step S19). If the processing is not complete yet, the process returns to step S1 to repeat the processing. If the processing is complete, the metadata acquisition unit 12 ends the processing shown in FIG. 5.

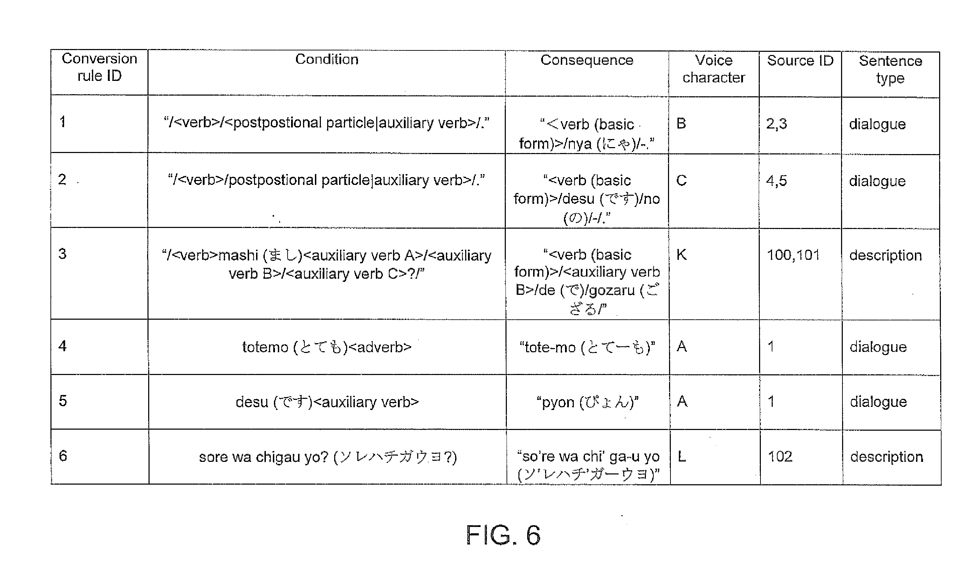

FIG. 6 exemplifies the merged results (conversion rules) of the processes for the practical example shown in FIG. 4. In this conversion rule example, each individual conversion rule includes "conversion rule ID" used to identify that conversion rule, "condition" indicating a condition of that conversion rule, "consequence" indicating a consequence of that conversion rule, "voice character" indicating a corresponding voice character, "source ID (rule ID in metadata shown in FIG. 4)" indicating a rule ID of a rule as a source, and "sentence type" indicating a type of a sentence.

### (Input Document Feature Extraction Unit 13)

The input document feature extraction unit 13 will be described below.

The input document feature extraction unit 13 inputs the document data in the DOM format acquired by the input acquisition unit 11 and the conversion rules acquired by the metadata acquisition unit 12, and then acquires information associated with the influences of the respective conversion rules on the document data.

An example of the processing of the input document feature extraction unit 13 will be described below.

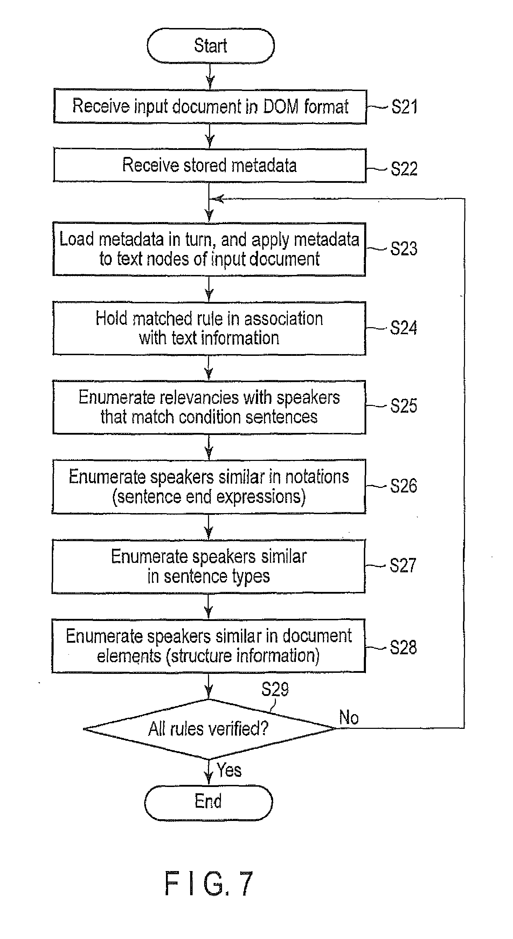

FIG. 7 shows an example of the processing of the input document feature extraction unit 13.

The input document feature extraction unit 13 receives the document data in the DOM format (step S21). In this case, assume that, for example, the document data shown in FIG. 3 is acquired.

Next, the input document feature extraction unit 13 receives the stored metadata (step S22). In this case, assume that, for example, the metadata acquisition results (conversion rules) shown in FIG. 6 are acquired.

Note that the example of FIG. 3 includes speakers (personas and the like in a book) J, P, Q, R, and T, and that of FIG. 6 includes voice characters A, B, C, K, and L.

Subsequently, the input document feature extraction unit 13 sequentially loads the conversion rules from the stored metadata, and applies the loaded conversion rules to the document data (step S23).

The input document feature extraction unit 13 applies the rules to the respective text nodes, and holds, for the rules whose condition parts match, the conversion rule IDs and matched text nodes in association with each other (step S24).

The input document feature extraction unit 13 enumerates relevancies with speakers that match the condition sentences (step S25). The input document feature extraction unit 13 holds the speakers (voice characters) in the rules which match the condition sentences with those (personas and the like in the book) in the document data in association with each other.

If correspondences between the speakers in the rules and those in the document data which are similar in notations (sentence end notations) are found, the input document feature extraction unit 13 holds them in association with each other (step S26).

If correspondences between the speakers in the rules and those in the document data which are similar in sentence types are found, the input document feature extraction unit 13 holds them in association with each other (step S27).

If correspondences with the speakers which are similar in document elements (structure information) are found, the input document feature extraction unit 13 enumerates them (step S28).

The input document feature extraction unit 13 determines whether or not verification processing is complete for all the rules (step S29). If the verification processing is complete for all the rules, the processing ends. On the other hand, if the rules and sentences to be verified still remain, the input document feature extraction unit 13 loads the metadata in turn, and repeats the same processing.

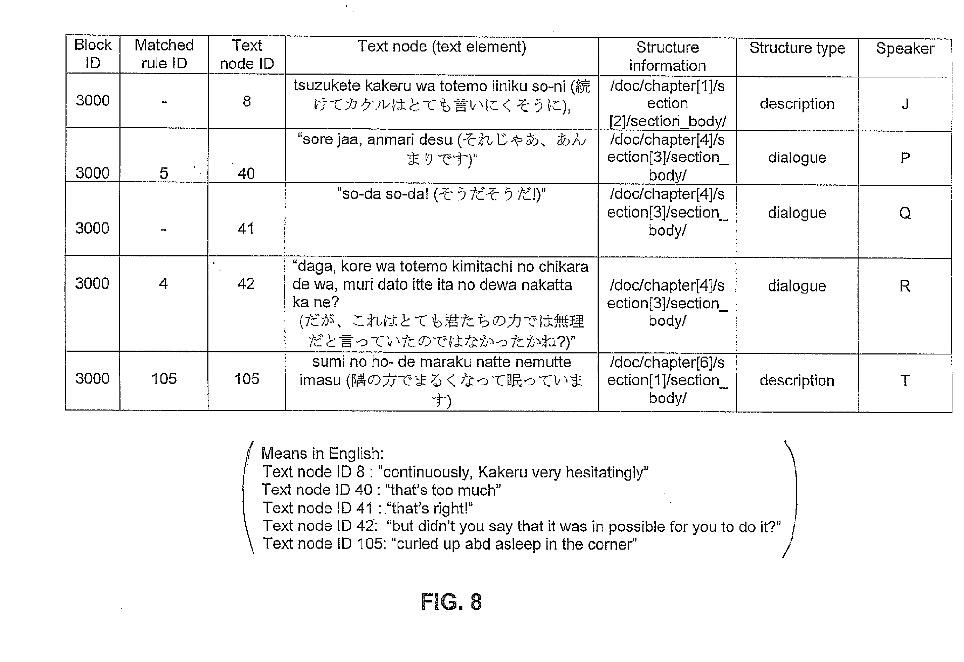

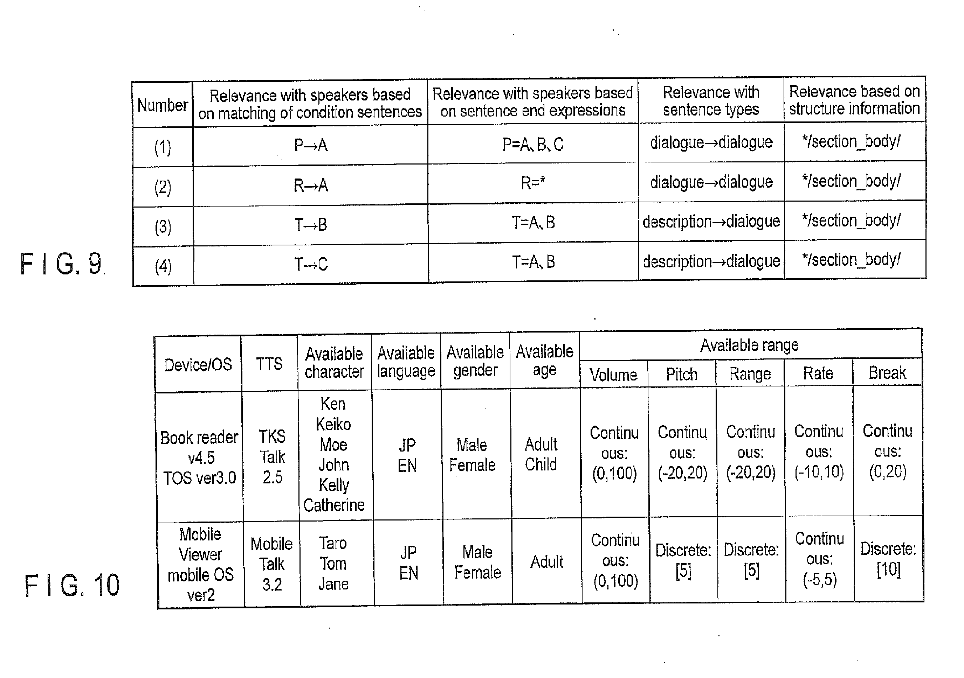

FIGS. 8 and 9 show the processing result examples of the input document feature extraction unit 13.

FIG. 8 shows the conversion rule IDs of the matched rules in correspondence with the respective text nodes in the document data. In FIG. 8, "matched rule ID" indicating the conversion rule IDs which match the respective text nodes is further added to the document data shown in FIG. 3. This practical example indicates that matched rule ID 5 matches text node ID 40, rule ID 4 matches text node ID 42, and rule IDs 1 and 2 match text node ID 105. Note that the correspondence between the text node IDs and matched rule IDs may be held while being embedded in the document data shown in FIG. 3 or independently of the document data shown in FIG. 3.

FIG. 9 shows results organized in association with the relevancies between the speakers obtained from different viewpoints based on these correspondence results. Each individual result includes "number", "relevance with speakers based on matching of condition sentences", "relevance with speakers based on sentence end expressions", "relevance with sentence types", and "relevance based on structure information". Note that P = * means correspondences with all the voice characters.

### (Relevance with Speakers based on Matching of Condition Sentences)

For example, in the first column of FIG. 9, as correspondences between speakers due to matching of condition sentences, P and A in the first row, R and A in the second row, T and B in the third row, and T and C in the fourth row are enumerated from those between the rules and input document.

### (Relevance with Speakers based on Sentence End Expressions)

Next, the relevancies between speakers are extracted from the correspondence relationships based on the sentence end expressions.

In this case, " 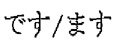 style" (desu/masu style) and " 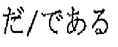 style" (da/dearu style) are distinguished from each other, and sentence end expressions, which belong to identical groups, are specified. For example, a sentence end expression, which matches " 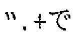 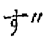 " (.+desu) or 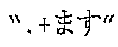 (.+masu) is determined as desu/masu style, and that which matches 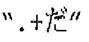 (.+da) or 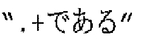 (.+dearu) is determined as da/dearu style, thereby distinguishing them. Based on this result, speakers having identical personalities are associated with each other.

For example, assume that since it can be recognized that text node ID 40 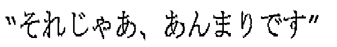 ("sore ja a, anmari desu") in FIG. 8 corresponds to desu/masu style, a correspondence relationship between speaker (persona or the like in the book) P and speakers (voice characters) A, B, and C corresponding to desu/masu style in the condition sentences in FIG. 4 is found. As a result, as correspondences with the speakers based on the sentence end expressions, P = A, B, C is obtained.

Also, it is recognized that speaker T of text node ID 105 in FIG. 8 corresponds to desu/masu style, and matched rule IDs 1 and 2, which correspond to this ID, correspond to speakers A and B in FIG. 4. As a result, T = A, B is obtained.

### (Relevance based on Sentence Types)

Next, pieces of relevance information based on the sentence types are extracted.

For example, in number (1) in FIG. 9, a correspondence between speaker (persona or the like in the book) P and speaker (voice character) A as a relevance obtained so far is described as a candidate.

As can be seen from the text node (text node ID 40; "sore jaa, anmari desu 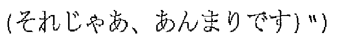 of this speaker P, this sentence type is "dialog-oriented". On the other hand, since speaker A in the rule (conversion rule ID 5 in FIG. 6) which hits the node of this text has a feature of the sentence type "dialog-oriented", they hold the same attribute.

As in number (2), as for the text node (text node ID 42; "daga, kore wa totemo kimitachi no chikara de wa muri dato itte ita no de wa nakatta ka ne 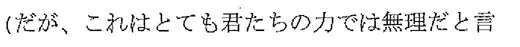 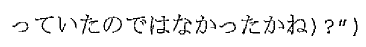 of speaker R, the sentence type is "dialog-oriented", and speaker A in the conversation rule which matches this rule also has the sentence type "dialog-oriented". Hence, these speakers have the same relationship.

On the other hand, as for numbers (3) and (4), the types of that input sentences are "description-oriented", but speakers B and C of the conversion rules (IDs 1 and 2) respectively corresponding to these rules have the sentence type "dialog-oriented". Hence, these speakers have different attributes.

### (Relevance based on Structure Information)

Furthermore, the relevancies based on the structure information are described.

In this case, only an element (section_body) as minimum generalization is clearly specified, and other differences are omitted (*).

The pieces of the aforementioned information are passed to the subsequent processing as the extraction results of the input document feature extraction unit 13.

### (Execution Environment Acquisition Unit 14)

The execution environment acquisition unit 14 will be described below.

The execution environment acquisition unit 14 acquires information (system environment information) associated with an environment of the system with which the user wants to execute the reading-out processing by means of speech synthesis.

More specifically, the system environment information includes information of a speech synthesis engine, voice characters, and/or parameter ranges, and the like, which are available for the user, in addition to information of a device and OS. Property information acquired from the installed speech synthesis engine includes, for example, a name, version, and the like of the speech synthesis engine (TTS), and attributes of available voices (voice characters) include, for example, character names, available languages, speaker genders, speaker ages, and the like. The parameter ranges are obtained as parameter information supported by the speech synthesis engine.

FIG. 10 shows an acquisition result example by this execution environment acquisition unit 14. FIG. 10 shows examples of two available operation environments.

The example of FIG. 10 includes a device (terminal) type, OS name, and a name and version of the speech synthesis engine.

Furthermore, as attributes of available voices, attributes such as available characters, available languages, available genders, and vocal age groups of the available characters are enumerated. This example indicates that the available languages are JP (Japanese) and EN (English), the available genders are Male and Female, and the vocal age groups of the available characters are Adult and Child.

Furthermore, as speech synthesis parameters, in association with respective pieces of information of Volume, Pitch, Range, Rate, and Break, available ranges are presented. For example, as for Volume (adjustable volume range), continuous values from 0 to 100 can be set. As shown in FIG. 10, as for Pitch, continuous values from -20 to 20 can be set for the resource shown in the upper column of FIG. 10, but only discrete values of five steps are supported for the resource shown in the lower column of FIG. 10. Also, for example, as for parameters Range, Rate, and Break (pause duration), continuous values (Continuous) or discrete values (Discrete) are described. Then, a value range is described for continuous values, and the number of steps or the like indicating how many steps can be set is described for discrete values.

These acquisition results are passed to the subsequent processing.

### (User Setting Restriction Acquisition Unit 15)

The user setting restriction acquisition unit 15 will be described below.

User setting restrictions include, for example, user's designated conditions and/or restriction conditions, which are to be applied in preference to the metadata. More specifically, a value or value range of a specific parameter may be designated.

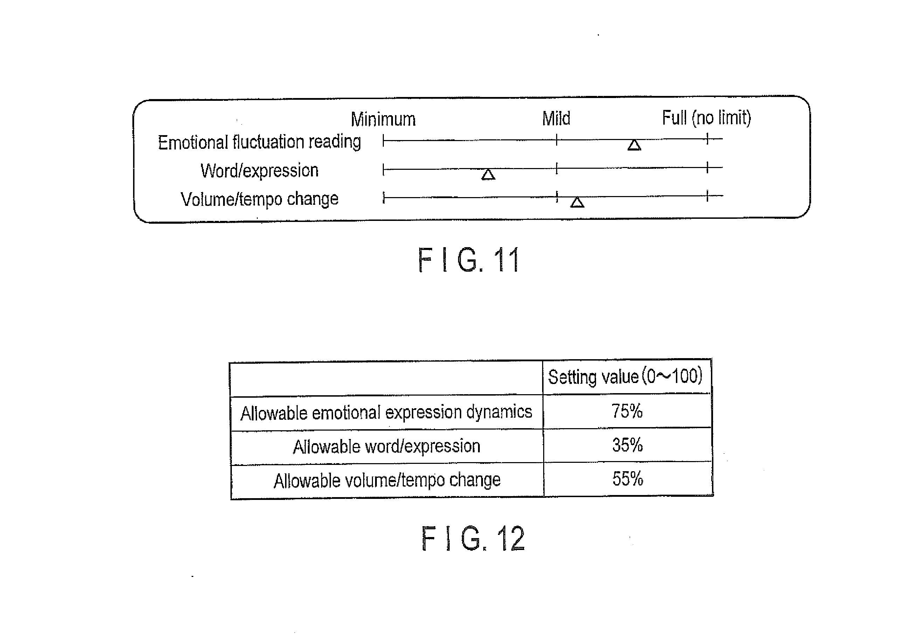

FIG. 11 shows an example of a user interface required for the user setting restriction acquisition unit 15 to acquire instruction information from the user, and FIG. 12 shows a storage example of the acquired results.

Assume that the user can set restrictions in advance for items which influence reading-out using a user interface which is exemplified in FIG. 11 and with which he or she can freely set values in correspondence with the items.

In the example shown in FIG. 11, an item "emotional fluctuation reading" allows the user to designate an allowable degree of reproduction as a synthetic voice of intense emotional expressions corresponding to, for example, "rage", "outcry", "keen", and the like in the document. As for this item, for example, when "full (no limit)" is set, reproduction is attempted at the time of reading-out by a method of directly applying an emotion prosody dictionary or the like to a definition of "rage", "keen", or the like in the metadata or user customization result, or changing parameters to be supplied to the synthesis engine. On the other hand, when a value other than "full" is set, the degree of emotional expression intensity is adjusted according to its ratio. For example, when "minimum" is set, reading-out is done by reducing the emotional expression effect by 90%. When "mild" is set, reading-out is done by suppressing the emotional expression effect to about a half degree (rage → anger).

An item "word/expression" allows the user to set degree information of cruel/intemperate/crude expressions, wording, prosody, and the like of a desperado or rowdy fellow in the novel or on the story. For example, without any limit, reading-out is realized along the metadata or user customized information. On the other hand, when this setting value is lowered, the effect of a deep, grim voice is reduced, and/or reading-out is done while replacing specific expressions, sentences, phrases, or words.

An item "volume/tempo change" allows the user to designate degree information for a surprised expression like "Hey!" at the crescendo of a scary story, a sudden shouted voice, or a stressful or speedy reading effect during driving or escape. As in the above example, when "full" is set, the metadata definition or user's customized information is used intact. However, when this setting is restricted, reading-out is done by reducing a degree of such expression.

FIG. 12 shows an example when the user setting restriction acquisition unit 15 stores the settings on the user interface.

Assume that an upper limit value (variable value) of each item is set according to a corresponding slider value on the user interface shown in FIG. 11. In this case, assume that with respect to "full", an allowable emotional expression degree is set to be about 75%, an allowable word/expression is set to be about 30%, and an allowable volume/tempo change degree is set to be about 55%.

These results are passed to the subsequent parameter decision unit 16.

### (Parameter Decision Unit 16 and User Verification Unit 17)

The parameter decision unit 16 and user verification unit 17 will be described below.

The parameter decision unit 16 integrates the processing results acquired so far to decide parameter information used in actual reading-out processing.

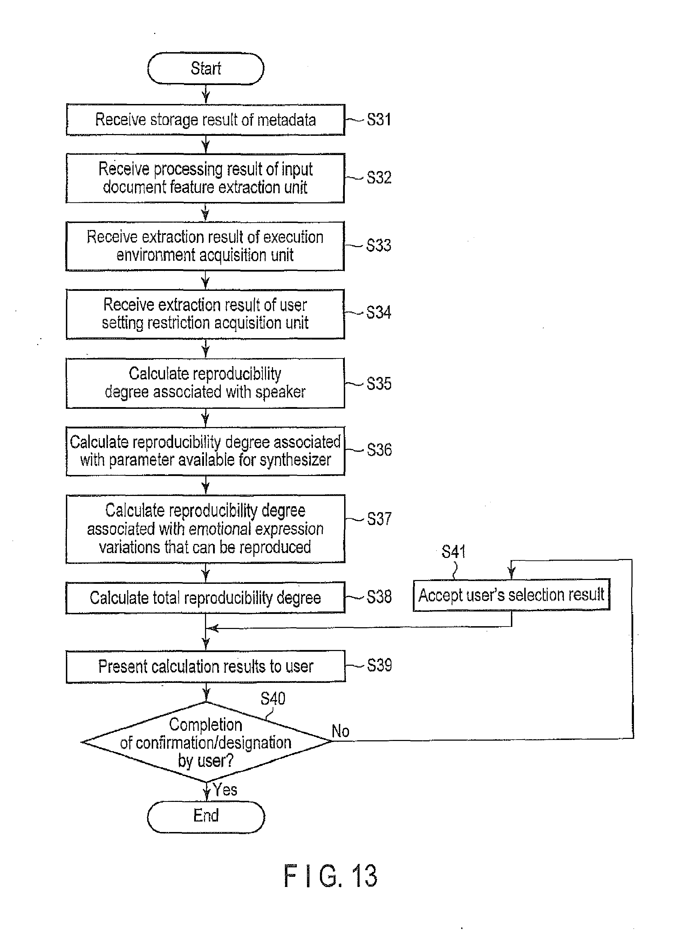

FIG. 13 shows an example of the processing of the parameter decision unit 16.

An example of a processing of the parameter decision unit 16 will be described below.

The parameter decision unit 16 receives the metadata storage results (step S31), the processing results of the input document feature extraction unit 13 (step S32), the execution results of the execution environment acquisition unit 14 (step S33), and the extraction results of the user setting restriction acquisition unit 15 (step S34) as the processing results up to the previous stage.

The parameter decision unit 16 calculates reproducibility degrees of respective items to be presented to the user. Note that one or both of steps S36 and S37 may be omitted.

Recommended environments as comparison targets of the reproducibility degrees will be described below.

The recommended environments assume three environments, that is, a recommended environment associated with voice characters, that (option) associated with emotions (expressions) upon reading-out, and that (option) associated with parameters. However, this embodiment is not limited to this.

The recommended environment associated with voice characters will be described below.

For example, from the processing results (for example, those shown in FIGS. 8 and 9) by the input document feature extraction unit 13, voice characters recommended when the metadata shown in FIG. 4 is applied to the digital book shown in FIG. 3 can be selected. For example, as can be seen from the above description, a method of assigning voice characters B, A, and C in the metadata shown in FIG. 4 to speakers P, R, and T in the document data shown in FIG. 3 is available. For example, when the document data includes data of the attributes (for example, a language, gender, age, personality, and the like) of the speakers, and the metadata includes data of the attributes (for example, a language, gender, age, personality, and the like) of the voice characters, a method of assigning the voice characters in the metadata to the speakers in the document data in consideration of the data of these attributes in addition to the processing results of the input document feature extraction unit 13 is also available. In addition, various methods of selecting recommended voice characters can be used.

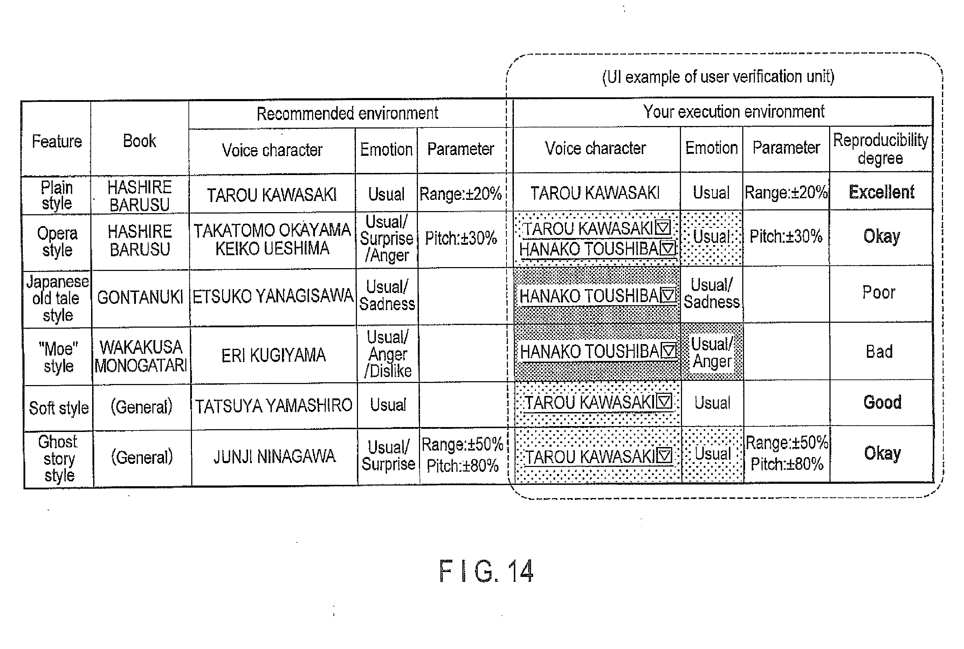

FIG. 14 exemplifies the recommended environment of voice characters (note that names of voice characters shown in FIG. 14 are exemplified as those different from the above description, and when the aforementioned example is used, voice characters A, B, C, and the like are described in the recommended environment of voice characters shown in FIG. 14).

Note that the example shown in FIG. 14 lists only the voice characters. Alternatively, the speakers in the document data corresponding to the respective voice characters may be presented together.

In the system environment of the user, the recommended voice characters A, B, C, and the like, or "Taro Kawasaki" in FIG. 14 and the like are not always available. The user can use only voice characters available in his or her system environment.

Thus, the parameter decision unit 16 compares the recommended voice characters and those which are available for the user to calculate reproducibility degrees associated with the speakers (step S35).

The reproducibility degree associated with each speaker can be expressed as a degree of matching between feature amounts of the speaker included in the input document (and/or those of a recommended voice character corresponding to that speaker), and the feature amounts of the voice character available for the user in the speech synthesizer. More specifically, respective available items such as a language, gender, age, and the like as attributes of the speaker and voice character are normalized appropriately to express them as elements of vectors. Then, a similarity (for example, a cosine distance) between these vectors is calculated, and can be used as a scale of a degree of matching. In addition, various other reproducibility degree calculation methods can be used.

Next, for example, when data of coverage ranges of parameters recommended to be used are provided as those included in the metadata, the parameter decision unit 16 calculates reproducibility degrees in association with coverage ranges of parameters available for the speech synthesizer (step S36). In the same manner as in the above description, a similarity between vectors is calculated using coverage ranges of the parameters as vector elements, and can be used as a scale of a degree of matching.

Next, for example, when data of emotional expressions (for example, "usual", "surprise", "anger", "sadness", "dislike", and the like) recommended to be used are provided as those included in the metadata, the parameter decision unit 16 calculates reproducibility degrees in association with the presence/absence of emotional expressions available for the speech synthesizer (step S37). In the same manner as in the above description, a similarity between vectors is calculated using the presence/absence of the emotional expressions as vector elements, and can be used as a scale of a degree of matching.

Note that the calculation order of steps S35 to S37 is not particularly limited. Also, one or both of steps S36 and S37 may be omitted.

Also, the parameter decision unit 16 calculates an integrated total degree of matching (reproducibility degree) (step S38). This total reproducibility degree can be defined as a product of degrees of matching associated with the respective functions as follows.

Reproducibility degree = Degree of matching of speaker feature amounts × Degree of matching of available emotions × Degree of matching of parameters that can be played back × Document feature coverage ratio of metadata alteration parts

Note that as the total reproducibility degree, for example, a numerical value may be presented or the calculated degree may be classified into some levels, and a level value may be presented.

The user verification unit 17 individually presents the degrees of matching associated with the respective functions, which are calculated, as descried above, for the respective functions, and also presents the total reproducibility degree together, as shown in, for example, FIG. 14 (step S39).

For example, in a book of the second row, a recommended voice character "Takatomo Okayama" cannot be used in the execution environment, and "Taro Kawasaki" having the highest degree of matching is presented. By pressing a button beside "Taro Kawasaki", the user can change and select a recommended voice character of the next or subsequent candidate.

For example, in a book of the first row, "Taro Kawasaki" which matches the recommended voice character "Taro Kawasaki" is presented in the execution environment. In this case, the next candidate of the voice character in the execution environment is not presented.

Note that degrees of matching may be explicitly presented for the respective functions. Or for example, a frame itself of a field which presents an item with a low degree of matching or display characters may be highlighted. For example, in this case, the degrees of matching may be classified into some levels, and different colors or brightness levels may be used for respective levels. Conversely, a frame itself of a field which presents an item with a high degree of matching or display characters may be highlighted.

Upon presenting the total reproducibility degree, low and high reproducibility degrees may be displayed in different modes (for example, different colors). For example, in the example of FIG. 14, "Excellent", "Good", and "Okay", and "Poor" and "Bad" may use different display colors.

In addition, various display methods which can easily inform the user of the results can be used.

Next, the user verification unit 17 obtains user's confirmation/correction (step S41).

For example, when the user presses a button beside a voice character presented as the first candidate, a recommended voice character of the next or subsequent candidate is changed and selected.

The user can repeat the user's confirmation/correction in step S41, and if the user's confirmation/selection & designation for the presented results is complete (step S40), this processing ends.

Note that the user may explicitly input a final settlement instruction. For example, a settlement button may be provided.

The processing results are passed to the speech synthesis unit 18 as control parameters.

### (speech synthesis unit 18)

The speech synthesis unit 18 generates a synthetic voice while applying the conversion rules which match the designated speaker and document expressions as control parameters, and outputs it as a reading voice by the voice character.

With the aforementioned sequence, playback which can ensure reproducibility can be implemented in consideration of computer resources and functions actually available for the user, and differences in content to be read-out.

According to this embodiment, easiness of user customization for metadata associated with reading-out processing of document data and flexibility of a system environment used in reading-out processing of document data can be ensured, and reproducibility of reading-out processing can be prevented from being impaired.

Also, instructions described in the processing sequences in the aforementioned embodiment can be executed based on a program as software. A general-purpose computer system may store this program in advance, and may load this program, thereby obtaining the same effects as those of the document reading-out support apparatus of the aforementioned embodiment. Instructions described in the aforementioned embodiment are recorded, as a computer-executable program, in a magnetic disk (flexible disk, hard disk, etc.), an optical disk (CD-ROM, CD-R, CD-RW, DVD-ROM, DVD±R, DVD±RW, etc.), a semiconductor memory, or a recording medium equivalent to them. The storage format is not particularly limited as long as the recording medium is readable by a computer or embedded system. When the computer loads the program from this recording medium, and controls a CPU to execute the instructions described in the program based on that program, the same operations as those of the document reading-out support apparatus of the aforementioned embodiment can be implemented. Of course, the computer may acquire or load the program via a network.

Based on the instruction of the program installed from the recording medium in the computer or embedded system, an OS (Operating System), database management software, MW (middleware) of a network, or the like, which runs on the computer may execute some of processes required to implement this embodiment.

Furthermore, the recording medium of this embodiment is not limited to a medium independent of the computer or embedded system, and includes that which stores or temporarily stores a program downloaded from a LAN or the Internet.

The number of recording media is not limited to one. The recording medium of this embodiment also includes a case in which the processes of this embodiment are executed from a plurality of media, and the configurations of the media are not particularly limited.

Note that the computer or embedded system of this embodiment executes respective processes of this embodiment based on the program stored in the recording medium, and may be any of an apparatus including one of a personal computer, microcomputer, and the like, or a system obtained by connecting a plurality of apparatuses via a network.

The computer of this embodiment is not limited to a personal computer, and includes an arithmetic processing device, microcomputer, or the like included in an information processing apparatus. Hence, the computer of this embodiment is a genetic name of a device or apparatus which can implement the functions of this embodiment by means of the program.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A document reading-out support apparatus, **characterized by** comprising:
a document acquisition means (11) for acquiring document data including a plurality of text data;
a metadata acquisition means (12) for acquiring metadata including a plurality of definitions each of which includes a condition associated with the text data to which the definition is to be applied, and a reading-out style for the text data that matches the condition;
an extraction means (13) for extracting features of the document data by applying each of the definitions to the text data included in the document data;
an execution environment acquisition means (14) for acquiring execution environment information associated with an environment in which reading-out processing of the document data is executed;
a decision means (16) for deciding candidates of parameters which are used upon execution of the reading-out processing by applying the metadata to the document data, based on the features of the document data and the execution environment information; and
a user verification means (17) for presenting the candidates of the parameters to a user, and to accept a verification instruction including selection or settlement.

2. The apparatus of claim 1, **characterized by** further comprising a speech synthesis means (18) for generating a reading voice for the document data using the parameters settled via the user verification means (17).

3. The apparatus of claim 1 or 2, **characterized by** further comprising a user setting restriction acquisition means (15) for acquiring user setting restrictions which have precedence over the metadata from the user.

4. The apparatus of claim 3, **characterized in that** the decision means (16) limits values or value ranges that the parameters are able to assume in consideration of the user setting restrictions.

5. The apparatus of claim 3 or 4, **characterized in that** the user setting restrictions are allowed to define at least one of a change range, an emotion type, and a tone of an emotional expression used in the reading-out processing, a word or a phrase to be read-out, and a change range or value of a volume or tempo.

6. The apparatus of claim 1, **characterized in that** the extraction means (13) generates an extraction rule to be applied to whole related information from some definitions by generalizing and applying correspondence relationships described in the metadata upon extraction of the features of the document data.

7. The apparatus of claim 1, **characterized in that** as the definition, a target sentence or word and a corresponding reading-out way or accent are defined, and
the extraction means (13) acquires an appropriate correspondence relationship by generalizing a correspondence relationship from the definitions step by step.

8. The apparatus of claim 1, **characterized in that** the extraction means (13) uses a superficial expression, a sentence end expression, part-of-speech information, structure information of a sentence, or a sentence type upon extracting the features of the document data.

9. The apparatus of claim 1, **characterized in that** the decision means (13) decides the candidates of the parameters based on similarities between properties of speakers included in the document data and properties of speakers defined in the metadata.

10. A text reading-out support method, **characterized by** comprising:
acquiring document data including a plurality of text data;
acquiring metadata including a plurality of definitions each of which includes a condition associated with the text data to which the definition is to be applied, and a reading-out style for the text data that matches the condition;
extracting features of the document data by applying each of the definitions to the text data included in the document data;
acquiring execution environment information associated with an environment in which reading-out processing of the document data is executed;
deciding candidates of parameters which are used upon execution of the reading-out processing by applying the metadata to the document data, based on the features of the document data and the execution environment information; and
presenting the candidates of the parameters to a user, and accepting a verification instruction including selection or settlement.

11. A non-transitory computer-readable storage medium, **characterized by** storing a computer program which is executed by a computer to provide the steps of:
acquiring document data including a plurality of text data;
acquiring metadata including a plurality of definitions each of which includes a condition associated with the text data to which the definition is to be applied, and a reading-out style for the text data that matches the condition;
extracting features of the document data by applying each of the definitions to the text data included in the document data;
acquiring execution environment information associated with an environment in which reading-out processing of the document data is executed;
deciding candidates of parameters which are used upon execution of the reading-out processing by applying the metadata to the document data, based on the features of the document data and the execution environment information; and
presenting the candidates of the parameters to a user, and accepting a verification instruction including selection or settlement.
